Europäisches Patentamt

European Patent Office

Office européen des brevets

(19)

(11) **EP 0 770 900 A1**

(12) # DEMANDE DE BREVET EUROPEEN

(43) Date de publication:
**02.05.1997 Bulletin 1997/18**

(51) Int. Cl.[6]: **G02F 1/15, E06B 3/66**

(21) Numéro de dépôt: **95402402.2**

(22) Date de dépôt: **26.10.1995**

(84) Etats contractants désignés:
**BE DE ES FR GB IT NL SE**

(71) Demandeur: **SAINT-GOBAIN VITRAGE**
**92400 Courbevoie (FR)**

(72) Inventeurs:
• **Macquart, Philippe**
**F-92600 Asnieres (FR)**

• **Ripoche, Xavier**
**F-75019 Paris (FR)**

(74) Mandataire: **Breton, Jean-Claude**
**SAINT-GOBAIN RECHERCHE**
**39, quai Lucien Lefranc**
**93300 Aubervilliers Cedex (FR)**

(54) **Vitrage électrochrome**

(57) L'invention concerne un vitrage électrochrome comportant une couche fonctionnelle principale (13) constituée d'un matériau qui, sous l'effet d'un courant électrique, est capable d'insérer de façon réversible des cations et qui présente des caractéristiques de coloration et/ou de transmission dans certaines longueurs d'onde du rayonnement électromagnétique différentes pour ses états insérés et désinsérés. Ladite couche fonctionnelle principale (13) a une structure quasi-colonnaire, avec des axes de croissance des colonnes parallèles à des droites contenues dans un dièdre dont l'ouverture est inférieure à 20° et dont le plan bissecteur fait avec le substrat (10) un angle aigu.

FIG_2

EP 0 770 900 A1

## Description

La présente invention a trait à des vitrages électrocommandés dont l'état de coloration et/ou la transmission dans certaines longueurs d'onde du rayonnement électromagnétique, notamment dans le visible, varient sous l'effet d'un courant électrique. Plus précisément, l'invention concerne ceux de ces vitrages basés sur une couche d'un oxyde d'un métal de transition capable d'insérer, de manière réversible, des cations, les états d'oxydation correspondant aux états insérés et désinsérés présentant des propriétés de coloration et/ou de transmission lumineuse différentes.

Le plus souvent, de tels vitrages comportent à titre de couche fonctionnelle principale une couche d'oxyde de tungstène $WO_3$ matériau électrochrome cathodique, incolore quand le tungstène est dans son état maximal d'oxydation (+ 6) et bleu-nuit pour un état d'oxydation inférieur à 5, la réaction d'insertion de cations pouvant alors s'écrire :

$$WO_3 \text{ (a)} + x\, M^+ + x\, e^- \leftrightarrow M_x WO_3 \text{ (b) où } M^+ = Li^+, H^+ \text{ etc...}$$

Pour une bonne réversibilité de la coloration, une source de cations - elle-même de préférence constituée par une couche de matériau électrochrome - doit être associée à la couche d'oxyde de tungstène. Le contraste est bien sûr renforcé si on utilise un matériau à coloration dit anodique qui, à l'inverse de l'oxyde de tungstène, est coloré à l'état désinséré. Entre les deux couches de matériau électrochrome, on interpose un électrolyte moyen de transfert des cations ; enfin le système doit être complété par des couches électroniquement conductrices pour l'apport en courant électrique.

De tels vitrages qualifiés parfois d'intelligents, sont particulièrement intéressants pour le contrôle des apports du rayonnement solaire dans des régions où l'ensoleillement varie d'une manière importante tout au long de l'année et où il est de sorte souhaitable de disposer à certains moments d'un vitrage anti-solaire très efficace, ce qui s'accompagne d'une coloration foncée très prononcée et à d'autres, d'un vitrage au contraire très clair pour permettre un bon éclairage par la lumière naturelle.

Toutefois, ces vitrages présentent des propriétés optiques isotropes pour toutes les directions d'incidence du rayonnement. Or, en pratique, toutes ces directions ne sont pas équivalentes : il va de soi que la source principale du rayonnement énergétique atteint le vitrage le plus souvent sous une incidence grande, au-dessus de l'horizontale. Par contre le regard de l'occupant du bâtiment sera le plus souvent dirigé selon le plan normal au vitrage ou vers le bas. D'autre part, la réduction de la transmission lumineuse qui accompagne toute réduction de la transmission énergétique est la plus souvent considérée comme un défaut des vitrages anti-solaires inévitable, mais néanmoins désagréable. De ces points de vue, il serait souhaitable que le vitrage présente une certaine sélectivité angulaire, c'est-à-dire que ses performances optiques soient renforcées selon la direction d'incidence du rayonnement électromagnétique.

La demande de brevet français FR-2 698 093, correspondant à la demande de brevet européen EP-A-0 598 660, enseigne un vitrage dont les propriétés de transmission varient en fonction de la lumière incidente, obtenu par pulvérisation cathodique d'une cible en alliage métallique - notamment du type nickel-chrome ou tantale, un guide canalisant les particules émises par la cible pour les diriger obliquement sur le plan du substrat. Ce procédé permet d'obtenir, à une échelle industrielle, des couches minces dont la structure peut être qualifiée de pseudo-colonnaire, les axes de croissance des cristaux étant parallèles à des droites contenues dans un dièdre d'ouverture étroite, dont le plan bissecteur fait avec le substrat un angle aigu.

Ce procédé permet l'obtention de vitrages ayant une bonne sélectivité optique en fonction de la direction d'observation. Pour autant, ces vitrages restent des vitrages passifs dont les propriétés optiques sont figées : les performances optiques de ces vitrages sont optimisées pour des conditions d'ensoleillement bien précises, ce qui est loin d'être parfait pour des régions où celles-ci varient continuellement.

L'invention a pour but un vitrage électrochrome qui - dans un de ses états de coloration - présente une forte anisotropie de ses caractéristiques de transmission du rayonnement électromagnétique. L'invention concerne ainsi un vitrage électrochrome comportant une couche fonctionnelle principale constituée d'un matériau qui, sous l'effet d'un courant électrique, est capable d'insérer de façon réversible des cations et qui présente des caractéristiques de coloration et/ou de transmission dans certaines longueurs d'onde du rayonnement électromagnétique différentes pour ses états insérés et désinsérés. Ceci est obtenu par le fait que la couche fonctionnelle principale a une structure quasi-colonnaire et que les axes de croissance des cristaux de la couche électrochrome principale sont parallèles à des droites contenues dans un dièdre dont l'ouverture est inférieure à 20° et dont le plan bissecteur fait avec le substrat un angle aigu, de préférence inférieur à 40° et de préférence encore compris entre 10 et 30°.

Les auteurs de la présente invention ont trouvé que la structure colonnaire (ou quasi-colonnaire) de la couche électrochrome ne modifie pas ses capacités d'insertion réversible de cations. Plus même, il semble que cette structure soit plutôt favorable. Le phénomène d'électrochromisme est préservé, mais par contre les performances optiques du vitrage - dans son état coloré - sont anisotropes.

Pour améliorer encore la sélectivité angulaire du vitrage selon l'invention, la contre-électrode - dans la mesure où elle est également constituée par une couche d'un matériau électrochrome - est de préférence de même une couche à structure colonnaire déposée dans des conditions telles que les axes de croissance de cristaux de la couche fonctionnelle principale sont parallèles à des droites contenues dans un dièdre dont l'ouverture est inférieure à 20° et dont le plan bissecteur fait avec le substrat un angle aigu.

Dans un premier mode de réalisation, les substrats portant les deux couches électrochromes, en regard l'un de l'autre, doivent être disposés de façon à ce que les axes de croissance des deux couches électrochromes soient essentiellement parallèles : c'est le cas où les deux matériaux électrochromes et le matériau électrolyte qui les sépare ont des indices de réfraction très proches voire identiques.

Dans un second mode de réalisation, les axes de croissance des deux couches en matériau électrochrome restent de même direction générale, mais ne sont plus tout à fait parallèles : c'est notamment le cas où il existe des différences d'indice de réfraction entre la première couche électrochrome cathodique, l'électrolyte et la contre-électrode. Ce non-parallélisme est alors réglé de préférence de manière à « compenser » la déviation du faisceau lumineux ou électromagnétique traversant ces trois matériaux d'indices différentes, le choix de l'angle des axes de croissance de la contre-électrode s'effectuant alors par simple calcul ayant recours à la loi de Descartes bien connue.

Par contre, les autres couches du vitrage - en particulier les couches transparentes électroniquement conductrices et les éventuelles couches barrières placées par exemple entre l'électrolyte et l'une ou l'autre des couches de matériau électrochrome, sont avantageusement des couches isotropes, ou du moins présentant des propriétés optiques essentiellement isotropes selon la direction d'incidence du rayonnement électromagnétique. Dans ces conditions, à l'état décoloré, le vitrage ne présente aucune sélectivité angulaire, l'anisotropie des propriétés optiques étant due essentiellement à une moindre absorption du rayonnement lorsque celui-ci a une incidence parallèle ou voisine à l'axe de croissance des cristaux colorés. Cette absence totale de sélectivité angulaire à l'état décoloré est avantageuse, en particulier en hiver, afin de tirer parti au maximum de l'éclairage naturel.

Dans une autre variante de réalisation, au moins certaines des autres couches du vitrage, sont des couches à structure quasi-colonnaire, présentant des propriétés optiques anisotropes selon la direction d'incidence du vitrage. Dans ce cas, la sélectivité angulaire est également présente à l'état décoloré, mais à un moindre degré.

Les meilleurs résultats sont observés lorsque la longueur des colonnes est du même ordre de grandeur que la longueur d'onde du rayonnement pour laquelle la sélectivité maximale est recherchée. Si le dièdre d'orientation des cristaux admet un plan bissecteur à 30° du plan du substrat, la longueur des colonnes sera voisine de deux fois l'épaisseur de la couche : pour une absorption dans le rouge et le proche infrarouge, il est de ce fait avantageux d'utiliser des couches électrochromes dont l'épaisseur est typiquement voisine de 300 à 500 nm, gamme d'épaisseurs qui convient bien pour la réalisation de systèmes électrochromes dont la couche fonctionnelle principale est à base d'oxyde de tungstène.

D'autres caractéristiques et avantages particuliers de l'invention ressortent de la description faite ci-après de différents exemples de réalisation de l'invention, faite en référence aux dessins annexés, qui représentent :

- **figure 1** : une vue schématique d'une installation de dépôt conforme à l'enseignement de la demande de brevet français FR-2 698 093,
- **figure 2** : une vue schématique d'un vitrage électrochrome à sélectivité angulaire.

La technique utilisée est la pulvérisation cathodique non-réactive ou réactive. De préférence, on utilise des cathodes à « magnétron », c'est-à-dire dont l'utilisation est assistée par champ magnétique, ce qui permet d'accroître la vitesse de pulvérisation.

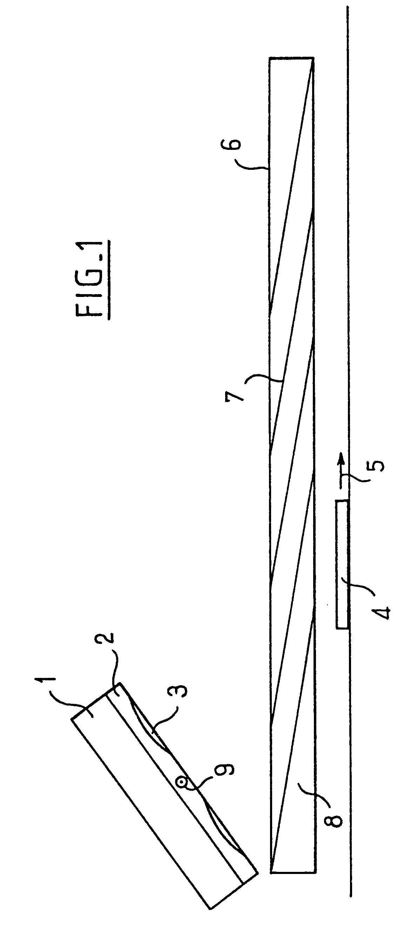

La figure 1 représente une coupe horizontale de l'installation d'essai. Il s'agit d'une installation de pulvérisation cathodique classique utilisant un magnétron du type de celui décrit dans le brevet DE 24 63 431 C2. Ce magnétron 1 est situé verticalement dans une enceinte à vide non représentée sur la figure, c'est-à-dire que l'axe de symétrie 9 longitudinal de la cible « race track » est vertical. On peut introduire des gaz tels que l'argon ou des gaz réactifs. La cathode magnétron 1 est équipée d'une cible 2, il s'agit de préférence d'une cible métallique. Sur la figure 1, on voit en 3 les zones d'érosion maximum de la cible 2, là où la pulvérisation est effectuée essentiellement et entre ces zones, l'axe 9. L'installation est équipée d'un support d'échantillon non représenté qui permet un déplacement horizontal de l'échantillon vertical 4 dans son plan dans la direction de la flèche 5.

Parallèlement à l'échantillon 4 entre celui-ci et la cathode 1, on a placé un guide 6. Celui-ci est constitué d'un ensemble de plaques planes verticales 7 parallèles entre elles, ces plaques 7 sont assemblées grâce à un bâti 8 qui permet de fixer l'ensemble. Les plaques 7 sont distantes de 10 mm. Le matériau du guide 6 est avantageusement de l'acier inoxydable. L'ensemble est fixe par rapport à la cathode 1 et sensiblement parallèle à l'échantillon plan 4 à environ 10 mm de lui.

Ce dispositif d'essai permet aux particules émises par la cible de frapper l'échantillon selon des trajectoires situées dans des plans formant avec la surface de l'échantillon un angle $\alpha$ compris entre 5 et 40°.

Les particules arrivent en un point du substrat sous des incidences rasantes, dans des plans qui font avec la surface de l'échantillon un angle $\alpha$ de préférence choisi voisin de 30°.

Ce dispositif a été utilisé sur un substrat en verre float de 3 mm d'épaisseur revêtu d'une couche électroconductrice transparente d'oxyde d'indium dopé à l'étain, elle-même déposée par pulvérisation cathodique magnétron, sans guide placé entre l'échantillon et la cathode. L'épaisseur de la couche d'ITO est de 400 nm, sa résistance carrée de 5 Ohms.

La cible du magnétron est en tungstène métallique, le gaz est un mélange argon/oxygène.

La couche d'oxyde de tungstène a été déposée sur une épaisseur de 100 nm ; le guide d'onde étant tel que l'angle $\alpha$ entre la droite portant un axe de croissance des cristaux et le plan du substrat est de 30°, avec une dispersion (ouverture de dièdre) de 10°.

Le caractère électrochrome de la couche d'oxyde de tungstène quasicolonnaire ainsi obtenue a été testé en milieu lithium et en milieu protonique. Pour cela, le substrat est placé dans un bain d'électrolyte revêtu de la couche de $WO_3$ et d'une contre-électrode en platine, placés dans un bain liquide contenant ou un sel de lithium (en l'occurence ...) ou un acide tel par exemple que l'acide sulfurique. Une différence de potentiel est établie entre la contre-électrode de platine et la couche électroniquement conductrice sous la couche de $WO_3$ afin d'insérer (ou de désinsérer) des cations dans la couche électrochrome.

Des mesures de transmission lumineuse ont été effectuées en comparant la transmission sous une incidence de + 60° ou -60° par rapport à la normale au plan du substrat. Il s'agit d'une première mesure pour une incidence essentiellement parallèle à l'axe de croissance des cristaux, qui correspond pour l'essentiel à la direction du regard pour un observateur voulant voir le spectacle de la rue, et d'une seconde mesure selon l'angle complémentaire qui correspond pour l'essentiel à la direction principale du rayonnement solaire, notamment en été dans les régions tempérées.

Pour le premier système (voie lithium), les résultats suivants ont été obtenus, les valeurs de transmission lumineuse ayant été mesurées selon l'illuminant $D_{65}$ :

TABLEAU 1

| Angle d'incidence par rapport à la normale | + 60° | - 60° |
|---|---|---|
| Transmission lumineuse à l'état décoloré | 85 % | 85 % |
| Transmission lumineuse à l'état coloré | 45 % | 38,5 % |
| Contraste | 1,88 | 2,2 |

Pour le second système (voie protonique), les résultats suivants ont été obtenus :

TABLEAU 2

| Angle d'incidence par rapport à la normale | + 60° | - 60° |
|---|---|---|
| Transmission lumineuse à l'état décoloré | 85 % | 85 % |
| Transmission lumineuse à l'état coloré | 48 % | 42 % |
| Contraste | 1,77 | 2,03 |

Les deux systèmes présentent, pour l'état coloré, une différence relative de l'ordre de 15 % selon la direction d'incidence. Par contre, à l'état décoloré, aucune anisotropie n'est constatée.

Il est à noter que la couche de $WO_3$ choisie pour ce test avait une épaisseur relativement petite, ce qui explique que le contraste mesuré est relativement faible. Pour des épaisseurs plus grandes, le contraste est bien sûr beaucoup plus important, et de plus on constate avantageusement une augmentation de la sélectivité angulaire, avec un écart entre les contrastes beaucoup plus prononcé.

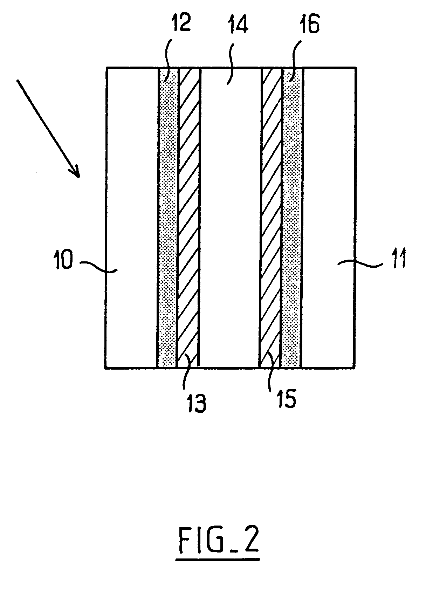

Une telle couche de matériau électrochrome peut être utilisée pour la réalisation d'un vitrage électrochrome complet tel que celui schématisé à la figure 2. Un tel vitrage comporte deux substrats en verre 10, 11 séparés par une couche électroconductrice transparente 12, la couche de $WO_3$ à structure essentiellement colonnaire 13, un électrolyte conducteur ionique 14, une contre-électrode formée d'un matériau électrochrome dit anodique 15 et une seconde couche électroconductrice transparente 16. Des moyens électriques, ici non représentés, sont prévus pour établir un courant électrique entre deux bornes diamétralement opposées situées l'une au contact de la couche électroniquement conductrice 12, l'autre de la couche 16.

Eventuellement, le système peut comporter d'autres couches, notamment dites « couches barrières », aux interfaces entre les couches électroniquement conductrices et les couches de matériau électrochrome et/ou aux interfaces électrolyte/matériau électrochrome. De préférence, toutes les couches en matériau non électrochrome sont déposées selon des techniques traditionnelles qui conduisent à des couches essentiellement isotropes du point de vue de leurs propriétés optiques.

L'électrolyte est de préférence un complexe solide polymère-sel ou polymère-acide. On trouvera des détails sur le mode de réalisation d'un tel système et en particulier des exemples d'assemblage et d'alimentation électrique de tels systèmes notamment dans les demandes de brevets européens EP-408 427, EP-475 847, EP-477 065 et EP-486 387.

Comme représenté figure 2, lorsque les deux couches de matériau électrochrome sont à croissance quasi-colonnaire, il faut veiller à ce que les panneaux soient orientés de manière à ce que les cristaux des deux couches soient portés par des axes essentiellement parallèles. D'autre part, dans le montage du vitrage, il faut veiller à ne pas inverser haut et bas du panneau, les axes de croissance des cristaux devant être orientés avec un angle opposé à l'incidence principale du rayonnement que l'on souhaite moduler (la flèche « f » schématisant ici le rayonnement solaire).

L'épaisseur de la couche de matériau électrochrome - et plus particulièrement de la couche d'oxyde de tungstène est de préférence de l'ordre de 300-500 nm, ce qui correspond à une sélectivité maximale pour des longueurs d'onde comprises entre 600 et 1000 nanomètres.

Pour des systèmes basés sur l'insertion réversible de cations de lithium, on utilise par exemple une contre-électrode d'oxyde de nickel NiO, déposée par pulvérisation cathodique magnétron à partir d'une cible de nickel métallique, en présence d'un mélange gazeux argon/oxygène. La plaque de verre revêtue de la couche d'oxyde de nickel déposée sur l'ITO est placée dans un électrolyte contenant un sel de lithium et formatée électrochimiquement pour y préinsérer des ions $Li^+$.

Pour de tels systèmes au lithium, l'électrolyte interposé entre les couches de matériau électrochrome est par exemple un polymère conducteur ionique formé notamment d'un complexe solide polyoxyéthylène-sel de lithium.

Pour des systèmes protoniques, l'électrolyte est par exemple une solution solide d'acide phosphorique anhydre dans du polyoxyéthylène, par exemple d'une épaisseur de 80 micromètres. La contre-électrode est par exemple une contre-électrode à base d'oxyde d'iridium, déposé par pulvérisation cathodique assistée par champ magnétique, en présence d'un mélange gazeux oxygène/hydrogène. L'épaisseur de la couche est de 50-200 nm pour une couche d'oxyde de tungstène d'environ 400 nm. Pour la contre-électrode, le guide orientant la croissance des cristaux n'est pas indispensable, mais toutefois il est préférable d'en utiliser un également pour la contre-électrode même si celle-ci concourt pour une plus faible part dans la valeur du contraste.

L'invention peut ainsi s'appliquer à de nombreuses configurations de vitrages électrochromes, fonctionnant aussi bien par conduction protonique que par conduction d'ions lithium $Li^+$.

La couche appelée fonctionnelle principale dans la couche de l'invention correspond par exemple à un matériau électrochrome cathodique du type oxyde de tungstène, que les cations soient des protons ou des ions lithium.

La contre-électrode correspond par exemple à un matériau électrochrome anodique, notamment à base d'oxyde d'iridium du type $H_xIrO_y$ comme décrit dans le brevet EP-0 338 876, ou à base d'oxyde de nickel $H_xNiO_y$ quand les cations sont des protons. Si les cations sont des ions lithium, elle peut être à base d'oxyde de nickel du type $Li_xNiO_y$ comme décrit dans le brevet EP-0 373 020, ou à base d'oxyde de cérium comme décrit dans le brevet FR-2 633 609.

Quand les cations sont des protons, l'électrolyte qui transfert les protons entre la couche fonctionnelle et la contre-électrode est un conducteur protonique qui peut être de nature polymérique, comme une solution solide d'acide phosphorique dans du polyoxyéthylène, comme décrit dans le brevet EP-0 253 713, éventuellement additionné d'additifs du type agent antioxydant et/ou agent thixotrope comme décrit dans le brevet EP-A-0 670 346. L'électrolyte peut aussi être minéral comme de l'oxyde hydraté de tantale $H_xTa_2O_y$, d'antimoine $H_xSb_2O_y$ ou de niobium $H_xNb_2O_y$.

Quand les cations sont des ions lithium, cet électrolyte peut être un conducteur de Li+ polymérique, comme une solution de polyoxyéthylène imine branchée (BPEI), éventuellement additionnée d'un plastifiant, et d'un sel de lithium, comme décrit dans le brevet EP-0 518 754. L'électrolyte peut aussi être minéral, comme de l'oxyde de tantale lithié $Li_xTa_2O_y$, du fluorure de magnésium lithié $Li_xMgF_2$, du nitrure de lithium $Li_3N$ ou un aluminosilicate de lithium.

L'empilement usuel d'un vitrage électrochrome comporte donc, comme évoqué précédemment, un premier substrat transparent du type verre, une première couche électroconductrice (par exemple en $SnO_2$:F ou en ITO), la couche fonctionnelle en matériau électrochrome, l'électrolyte, la contre-électrode également en matériau électrochrome, une seconde couche électroconductrice et enfin un second substrat transparent du type verre. Il peut cependant être avantageux d'insérer des couches dites « barrières » dans cet empilement pour diverses raisons :

Peuvent ainsi être prévues entre les couches électroconductrices et au moins une des couches en matériau électrochrome des couches-barrières, notamment en oxyde d'étain ou oxyde de tungstène à haute densité. Pour plus de détails, on se reportera au brevet EP-0 486 387.

Des couches-barrières peuvent également être interposées entre l'électrolyte et la contre-électrode, et éventuellement aussi entre l'électrolyte et la couche fonctionnelle. Ces couches doivent être ouvertes à la diffusion des cations $M^+$ et notamment à base d'au moins un des matériaux suivants : oxydes de la colonne V-B du tableau périodique, dont plus particulièrement l'oxyde de tantale et l'oxyde de niobium, mais aussi du fluorure de cérium $CeF_3$, de l'oxyde d'antimoine $Sb_2O_3$, de l'hexa-uranylphosphate HUP, de l'oxyde de chrome $Cr_2O_3$, de l'oxyde de zirconium $ZrO_2$, ou par un conducteur ionique du type $Li_3N$, $LiTaO_3$, $LiAlF_4$, $Li_3PO_4$, $LiBO_2$ ou $LiNbO_3$, plus particulièrement dans le cas où $M^+$ = $Li^+$. Pour plus de détails on se reportera au brevet EP-0 628 849.

Comme évoqué précédemment, les couches électroconductrices et/ou les couches-barrières peuvent être isotropes ou anisotropes quant à leurs propriétés optiques.

## Revendications

1. Vitrage électrochrome (10 - 11) comportant une couche fonctionnelle principale (13) constituée d'un matériau qui, sous l'effet d'un courant électrique, est capable d'insérer de façon réversible des cations M$^+$ et qui présente des caractéristiques de coloration différentes pour ses états insérés et désinsérés et en outre une contre-électrode (15) formée d'un matériau qui, sous l'effet d'un courant électrique, est également capable d'insérer de façon réversible des cations et qui présente, de préférence, des caractéristiques de coloration différentes pour ses états insérés et désinsérés, **caractérisé en ce que** ladite couche fonctionnelle principale (13) a une structure quasi-colonnaire avec des axes de croissance de colonnes parallèles à des droites contenues dans un dièdre dont l'ouverture est inférieure à 20° et dont le plan bissecteur fait avec le substrat un angle aigu, de manière à conférer au vitrage, dans son état coloré au moins, des performances optiques anisotropes.

2. Vitrage électrochrome (10 - 11) selon la revendication 1, **caractérisé en ce que** ladite contre-électrode (15) a une structure quasi-colonnaire, avec des axes de croissance de colonnes parallèles à des droites contenues dans un dièdre dont l'ouverture est inférieure à 20° et orientées dans le vitrage (10 - 11), et qui sont soit essentiellement parallèles aux axes de croissance de la couche fonctionnelle principale (13), soit de même direction générale mais pas tout à fait parallèles, notamment afin de tenir compte d'éventuelles différences d'indice de réfraction entre couche fonctionnelle principale (13), contre-électrode (15) et électrolyte (14).

3. Vitrage électrochrome (10 - 11) selon la revendication 1 ou la revendication 2, **caractérisé en ce que** certaines des couches du vitrage non en matériau électrochrome présentent des propriétés optiques essentiellement isotropes selon la direction d'incidence du rayonnement électromagnétique.

4. Vitrage électrochrome (10 - 11) selon la revendication 1 ou la revendication 2, **caractérisé en ce que** certaines des couches du vitrage non en matériau électrochrome présentent des propriétés optiques essentiellement anisotropes selon la direction d'incidence du rayonnement électromagnétique.

5. Vitrage électrochrome (10 - 11) selon l'une des revendications précédentes, **caractérisé en ce que** l'épaisseur de la couche fonctionnelle principale (13) est de l'ordre de ½ fois la longueur d'onde du rayonnement pour laquelle la sélectivité maximale est souhaitée.

6. Vitrage électrochrome (10 - 11) selon l'une des revendications précédentes, caractérisé en ce que la couche fonctionnelle principale (13) est à base d'oxyde de tungstène, notamment quand les cations M$^+$ sont des protons H$^+$ ou des ions lithium Li$^+$.

7. Vitrage électrochrome (10 - 11) selon l'une des revendications précédentes, caractérisé en ce que la contre-électrode (15) est à base d'oxyde d'iridium du type H$_x$IrO$_y$ ou à base d'oxyde de nickel du type H$_x$NiO$_y$ quand les cations M$^+$ sont des protons H$^+$, et est à base d'oxyde de nickel du type Li$_x$NiO$_y$ ou à base d'oxyde de cérium du type Li$_x$CeO$_y$ quand les cations M$^+$ sont des ions lithium Li$^+$.

8. Vitrage électrochrome (10 - 11) selon l'une des revendications précédentes, caractérisé en ce que, quand les cations M$^+$ sont des protons H$^+$, l'électrolyte (14) transférant les protons entre la couche fonctionnelle (13) et la contre-électrode (15) est un matériau conducteur protonique polymérique, comme une solution solide d'acide phosphorique dans du polyoxyéthylène contenant éventuellement des additifs du type agent anti-oxydant et/ou agent thixotrope, ou un matériau conducteur protonique minéral comme de l'oxyde hydraté de tantale H$_x$Ta$_2$O$_y$, d'antimoine H$_x$Sb$_2$O$_y$ ou de niobium H$_x$Nb$_2$O$_y$.

9. Vitrage électrochrome (10 - 11) selon l'une des revendications 1 à 7, caractérisé en ce que, quand les cations M$^+$ sont des ions lithium Li$^+$, l'électrolyte (14) transférant les ions lithium entre la couche fonctionnelle (13) et la contre-électrode (15) est un conducteur de Li$^+$ polymérique, comme une solution de polyoxyéthylène imine branchée BPEI éventuellement additionnée de plastifiant et d'un sel de Li$^+$, ou un conducteur de Li$^+$ minéral comme l'oxyde de tantale lithié Li$_x$Ta$_2$O$_y$, du fluorure de magnésium lithié Li$_x$MgF$_2$, du nitrure de lithium Li$_3$N ou un aluminosilicate de lithium.

10. Vitrage électrochrome (10 - 11) selon l'une des revendications précédentes, caractérisé en ce que un électrolyte (14) transfert les cations M$^+$ du type Li$^+$ ou H$^+$ entre la couche fonctionnelle (13) et la contre-électrode (15) et en ce qu'est interposée entre l'électrolyte (14) et la contre-électrode (15), et éventuellement aussi entre l'électrolyte (14) et la couche fonctionnelle (13), une couche-barrière ouverte à la diffusion des cations M + et à base d'au moins un des matériaux suivants : oxydes de la colonne V-B du tableau périodique, dont plus particulièrement l'oxyde de tantale et l'oxyde de niobium, mais aussi du fluorure de cérium $CeF_3$, de l'oxyde d'antimoine $Sb_2O_3$, de l'hexa-uranylphosphate HUP, de l'oxyde de chrome $Cr_2O_3$, de l'oxyde de zirconium $ZrO_2$, ou par un conducteur ionique du type $Li_3N$, $LiTaO_3$, $LiAlF_4$, $Li_3PO_4$, $LiBO_2$ ou $LiNbO_3$, plus particulièrement dans le cas où $M^+ = Li^+$.

FIG.1

EP 0 770 900 A1

FIG_2

Office européen
des brevets

**RAPPORT DE RECHERCHE EUROPEENNE**

Numero de la demande

EP 95 40 2402

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,A | EP-A-0 338 876 (SAINT GOBAIN VITRAGE) 25 Octobre 1989 <br> * colonne 2, dernier alinéa - colonne 3, alinéa 1 * <br> --- | 1,6,7 | G02F1/15 <br> E06B3/66 |
| A | US-A-4 390 246 (T. MYOSHI) <br> * colonne 1, ligne 41 - colonne 3, ligne 27 * <br> --- | 1,3,6 | |
| A | US-A-4 447 133 (T. MYOSHI) <br> * colonne 1, ligne 62 - colonne 3, ligne 57 * <br> --- | 1,3,6 | |
| A | PATENT ABSTRACTS OF JAPAN <br> vol. 004 no. 078 (P-014) ,6 Juin 1980 <br> & JP-A-55 043575 (SEIKO INSTR & ELECTRONICS LTD) 27 Mars 1980, <br> * abrégé * <br> ----- | 1 | |

**DOMAINES TECHNIQUES RECHERCHES (Int.Cl.6)**

G02F

Le présent rapport a été établi pour toutes les revendications

| Lieu de la recherche | Date d'achèvement de la recherche | Examinateur |
|---|---|---|
| LA HAYE | 15 Mars 1996 | Wongel, H |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.............................................................
& : membre de la même famille, document correspondant

EPO FORM 1503 03.82 (P04C02)